# EUROPÄISCHE PATENTSCHRIFT

(11) **EP 2 547 511 B1**
(45) Veröffentlichungstag und Bekanntmachung des Hinweises auf die Patenterteilung: **03.08.2016**
(21) Anmeldenummer: 11715396.5
(22) Anmeldetag: 13.03.2011
(51) Int. Cl.: B29C 70/18, B29C 70/46, B29C 70/50, B29B 15/12

(54) **VERFAHREN UND ANLAGE ZUR HERSTELLUNG VON FASERVERSTÄRKTEN FORMTEILEN IN EINER FORMPRESSE**
METHOD AND SYSTEM FOR PRODUCING FIBER-REINFORCED MOLDED PARTS IN A MOLDING PRESS
PROCEDE ET INSTALLATION POUR LA FABRICATION DE PIECES MOULEES RENFORCEES PAR DES FIBRES DANS UNE PRESSE A MOULER

(30) Priorität: 13.03.2010 DE 102010002842
(43) Veröffentlichungstag der Anmeldung: 23.01.2013
(73) Patentinhaber: Dieffenbacher GmbH Maschinen- und Anlagenbau, 75031 Eppingen (DE)
(72) Erfinder: GRAF, Matthias, 75015 Bretten (DE)
(86) Internationale Anmeldenummer: PCT/EP2011/001232
(87) Internationale Veröffentlichungsnummer: WO 2011/113557

(56) Entgegenhaltungen:
- EP-A1- 1 386 721
- WO-A1-2011/057807
- WO-A2-03/031135
- DE-A1-102004 004 407

## Beschreibung

Die Erfindung betrifft ein Verfahren zur Herstellung von faserverstärkten Formteilen in einer Formpresse nach dem Oberbegriff des Patentanspruchs 1 und weiter eine Anlage zur Herstellung von faserverstärkten Formteilen nach dem Oberbegriff des Patentanspruchs 11.

Wegen ihren guten mechanischen Eigenschaften und des günstigen Preises sind solche nach dem SMC-Verfahren hergestellten Formteile die am meisten eingesetzten duroplastischen Faserverbundkunststoffe.

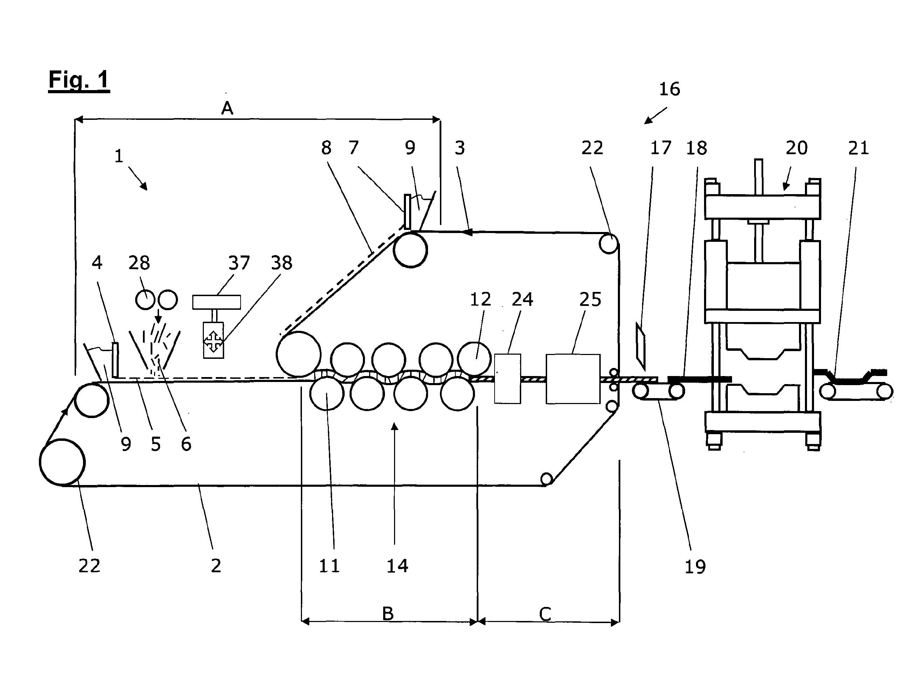

Bisher wird zur Herstellung von SMC-Teilen, beispielsweise bekannt aus der WO 03/031135 A2 oder der DE 10 2004 004 407 A1, zuerst der Rohstoff, bestehend aus einer Harzmasse (Harzansatz) mit eingelagerten geschnittenen Glasfasern, hergestellt. Dieser Harzansatz wird auf dünnen durchsichtigen Kunststofffolien (Trägerfolien) abgelegt und einem Reifeprozess unterzogen. Der derzeitige Reifeprozess liegt bei 4-5 Tagen und dient dem Eindicken des Harzansatzes mit den eingemischten Füllstoffe und/oder der verbesserten Tränkung der Glasfasern. Der Harzansatz besteht aus Harzen, Thermoplastlösungen, Füllstoffen, Fließverbesserer, integrierte Trennmittel, Inhibitoren und Härter. Dieser wird zu einer gut dispergierten Flüssigkeit auf vorgegebene Temperatur gerührt und an der Harzmattenanlage noch mit einem Eindickmittel, pulverförmig oder flüssig, versehen und über Rakel auf die untere und obere Trägerfolie aufgerakelt und in der Breite eingestellt. Auf die Harzansatzschicht der unteren Trägerfolie wird das Schnittglas, zum Beispiel von Endlos-Rovings mit Schneidwerken, aufdosiert. Danach legt sich die obere Trägerfolie mit dem Harzansatz auf den Schnittfaserbelag. Durch einen anschließenden Walkprozess werden die Fasern mit dem Harzansatz vermischt/getränkt und als Harzmatte anschließend auf eine Rolle gewickelt oder als flächiges Halbzeug für den Reifeprozess zwischengelagert. Durch den Reifeprozess dickt der Harzansatz so stark ein, dass die Trägerfolien rückstandsfrei abgezogen werden können. Aus dem flächigen Halbzeug oder den Rollen werden, abgestimmt auf das jeweils herzustellende Formteil, Zuschnittmatten herausgeschnitten und in einer Formpresse einfach oder als Paket abgelegt und verpresst (Figur 1). Dieses bekannte SMC-Verfahren wurde mittlerweile durch ein optimiertes Verfahren ergänzt. Dieses D-SMC-Verfahren benötigt keine Reifezeit mehr bzw. die Reifezeit wird durch Anpassung des verwendeten Harzes respektive durch die Additive derart verkürzt, dass nach dem Austrag aus einer Flachbahnanlage als Herstellungsvorrichtung für das SMC-Halbzeug direkt in einer Formpresse das SMC-Endprodukt hergestellt werden kann. Es entfällt eine langwierige oder mehrtätige Wartezeit der Reifung.

Mit EP 1 386 721 A1 ist ein Verfahren und eine Anlage bekannt geworden, der die Aufgabe zugrunde lag die Harzmatten (SMC-Halbzeug) mit der geeigneten Plastizität für eine unmittelbar folgende Direktverarbeitung zu Formteilen bereitzustellen. Besonders bevorzugt sollte dabei auf Folien verzichtet werden können und die Steuerung der Reifezeit bzw. der Eindickzeit der Harzmatten wurde im Wesentlichen dem Wärmeeintrag in einem temperierten Eindick-Durchlaufspeicher durchgeführt. Mittlerweile ist das kontinuierliche Direktverfahren zur Herstellung faserverstärkter Formteile ohne Zwischenlagerung der Harzmatten für den Reifeprozess im industriellen Leben verwirklicht und weist deutliche Vorzüge im Bereich der Just-In-Time-Produktion auf, wobei wesentliche Probleme der Lagerhaltung und insbesondere der Just-In-Time-Lieferung vermieden werden können. Besonders ist es hervorzuheben, dass mit EP 1 386 721 A1 eine möglichst kompakte Anlage offenbart worden ist, in der in einem Eindick-Durchlaufsspeicher für einen zeitlich vorgegebenen Reifeprozess, je nach der erforderlichen Länge, die temperierbaren Bandträgern mäanderförmig in einem Gehäuse angeordnet wurden. Durch die Anordnung der Bandträger und ihrer Ausführung in Länge und Anzahl übereinander, kann der Reifeprozess mit entsprechender Reifezeit ausgelegt werden.

Grundsätzlich hat sich diese Anlage bewährt, weist aber im hochindustriellen Betrieb mangelnde Flexibilität auf. Insbesondere ist es von Nachteil, dass bei bereits geringfügigen Abweichungen der Wanddicke in einem zu formenden Werkstück daran angepasste SMC-Matten oder SMC-Mattengelege in eine Formpresse eingebracht werden müssen. Üblicherweise wird hierzu eine Harzmatte zerschnitten oder aus Teilen und/oder mehreren gleichförmigen Harzmatte ein Gelege mit einem Muster erstellt, das manuell oder automatisiert mittels Industrierobotern zusammengestellt und in seiner Gesamtheit in das Werkzeug eingelegt wird. Derartige Mattengelege müssen immer für den Einzelfall konzipiert und bei jedem Werkzeugwechsel die Roboter- respektive die Anlagensteuerung neu eingelernt werden. Dies kostet Programmierungszeit und erhöht auch deutlich den Wartungsaufwand. Weiter ist bei der Produktion von einfachen Bauteilen nicht ausgelastete Anlagentechnik vorhanden, wenn keine oder nur sehr einfache Mattengelege zusammengesetzt werde müssen. Ein anderer Aspekt ist, dass die normalerweise homogenen und gleichförmigen SMC-Harzmatten regelmäßig an die zu formenden Werkstücke angepasst werden müssen, beispielsweise durch Auswalzen, Ziehen, Dehnen oder Aufschneiden.

Die Aufgabe der Erfindung besteht darin, eine Anlage und ein Verfahren zum Betreiben einer Anlage zur Herstellung von faserverstärkten Harzmatten für die Direktproduktion von SMC-Formteilen zu schaffen, die einen wesentlich größeren Spielraum und eine vereinfachte Anlagentechnik hinsichtlich der möglichen Produktionsmenge pro Zeiteinheit und/oder Produktionsarten bezogen auf den Bedarf gegenüber dem Stand der Technik aufweist. Dabei soll insbesondere die Aufgabe gelöst werden, dass nicht nur einheitliche SMC-Matten mit einem vorgegebenen Volumen respektive einer vorgegebenen Breite oder Höhe produziert werden können, sondern dass bezogen auf ein zu produzierendes Werkstück in einer Formpresse eine entsprechend angepasste und entsprechend geformte SMC-Matte erstellt wird, die entweder ohne Mehraufwand direkt verpresst werden kann und/oder die Bildung eines Geleges aus Zuschnittmatten deutlich vereinfacht oder die Anzahl der notwendigen Zuschnittmatten eines Geleges vermindert wird.

Die Lösung der Aufgabe besteht für das Verfahren darin, es entsprechend der Merkmalskombination des Anspruchs 1 auszuführen.

Die Lösung der Aufgabe besteht für eine Anlage darin, diese entsprechend der Merkmalskombination des Anspruchs 11 auszubilden. Hinsichtlich der verwendeten Begrifflichkeiten sollen folgende Festlegungen gelten: Die Erfindung versteht unter einer Harzmatte mit einer variablen Kontur eine Harzmatte, die nach dem Zuschnitt zu einer Zuschnittmatte einer vorgegebenen Länge in ihrer Breite b und/oder in ihrer Höhe h zumindest einen differenzierbaren Unterschied aufweist oder auf die Versorgung einer oder mehrere Formpressen respektive deren Werkzeuge angepasst ist. Hinsichtlich der Fasern versteht die Erfindung den geänderten Mengeneintrag derart, dass in der Harzmatte respektive in einer Zuschnittmatte über die Länge und/oder die Breite eine unterschiedliche Menge an Fasern vorhanden ist. Dies ergibt sich durch eine Veränderung der Streumenge über die Breite bei einem darunter kontinuierlich fortlaufenden (Transport-)Band. Bevorzugt wird die Streuung der Fasern ebenfalls über die Breite an die eingestellte Breite des Harzansatzaustrages angepasst, um nicht die Transportbänder unnötig zu verunreinigen und/oder die Materialverluste zu minimieren.

In Vorteilhafter Weise ist es nun möglich mit der erfindungsgemäßen Anlage bzw. mit dem Verfahren an das Werkzeug in einer oder mehrerer Formpressen angepasste Harzmatten für die Direktverwendung zu produzieren wobei
- mehrere Formpressen mit unterschiedlichen und auf die vorhandenen, insbesondere unterschiedlichen, Werkzeuge abgestimmten SMC-Matten versorgt werden können,
- Industrieroboter in erster Linie nicht zur Erstellung von Mattengelegen, sondern vorzugsweise nur zur Übergabe zwischen Flachbahnanlage und Formpresse Verwendung finden,
- unterschiedlichste Werkzeuge (Volumen- und/oder Zeitbezogen) in einer oder mehreren Formpressen Verwendung finden können oder
- extrem hochreaktive Harzansätze verwendet werden können, die ein sehr geringes Zeitfenster zur Verpressung aufweisen.

Es wird vorausgesetzt, dass die Versorgung mit Harzansatz zur Aufrakelung auf Folien oder Förderbänder grundsätzlich sichergestellt ist und diese entweder in entsprechender Menge angeliefert oder vor Ort mit geeigneten Herstellungsvorrichtungen produziert werden kann.

Die oben aufgereihten Vorteile sind insbesondere entscheidend, wenn mehrere Formpressen insgesamt in einer Herstellungsanlage für SMC-Bauteile angeordnet sind. Insbesondere ist bevorzugt, dass eine vollständige und automatisierte Steuerung der Gesamtanlage aus zumindest einer Harzmattenproduktion und zumindest einer, vorzugsweise mehreren Formpresse mit zwischen diesen beiden Hauptelementen zwischengeschaltete Übergabevorrichtung angeordnet ist. Vorzugsweise ist die Variante vorgesehen, in der eine Flachbahnanlage mehrere Formpressen bedient. Die Formpressen können dabei unterschiedliche Werkzeuge fahren, die je nach Presszeitaufwand beschickt werden. Beispielsweise kann eine Presse mit einer dreiminütigen Presszeit bei einer parallel zu beschickenden Presse mit einer sechsminütigen Presszeit zweimal mit den ihr zugewiesenen Harzmattenkonturen beschickt werden, bevor eine Harzmattenkontur für die zweite Presse erstellt wird.

Verfahrenstechnisch werden die einzelnen Anlagenteile zusammengeschaltet und derart gesteuert, dass Produktionsunterbrechungen oder Wartungsarbeiten in den Formpressen automatisch so gesteuert werden können, dass die Übergabevorrichtung und/oder der zuständige Anlagenteil zur Produktion der Harzmatten optimiert für die Bereitstellung der Harzmatten an den Formpressen sorgen, abhängig vom notwendigen Bedarf.

Im Wesen der Formpresse respektive deren Werkzeuge liegt es, dass für alle vorgeschriebenen Pressungen eine Mindestreinigung des Werkzeuges vorgesehen ist. Weiter finden sich Wartungsintervalle, die ebenfalls in regelmäßigen Abständen anfallen, aber nur wenige Minuten dauern. Die Steuerungsvorrichtung steuert die Harzmattenproduktion in der Flachbahnanlage derart, dass je nach zu erwartender Anforderung an Harzmatten durch die Pressensteuerungen immer die notwendige Anzahl an konturangepassten Harzmatten übergeben werden kann. Gleichzeitig verhindert die Steuerungsvorrichtung, dass aufgrund der Wartungs- oder Reinigungsintervalle eine Überproduktion an Harzmatten entsteht, die nicht verarbeitet werden können.

Desweiteren kann die Produktionsanlage auf Produktionsumstellungen/-veränderungen optimal reagieren und muss sich nicht nur mit der Variation der Bandgeschwindigkeit und des Austragsvolumens bei einheitlichen Harzmatten selbst begnügen. Alternativ kann in diesem Zusammenhang zumindest ein zusätzlicher Parameter, insbesondere der Wärmeeintrag in die Harzmatte während der Reifung, verändert werden. Besonders bevorzugt wird in diesem Zusammenhang eine Mikrowellenanordnung verwendet, die den Wärmeeintrag unabhängig von den lagernden respektive führenden Bändern der Flachbahnanlage, in die Harzmatte einbringen kann. Wärmeübertragung durch Konvektion ist zwar durchaus im Rahmen des machbaren und üblichen, aber hochwertige Bänder zum Transport der Harzmatten, insbesondere wenn keine Folien verwendet werden, weisen aber meist gute isolierende Eigenschaften auf. In besonders vorteilhafter Weise ist die Heizung, vorzugsweise eine HF-oder eine Mikrowellenheizung, mittels einer Zeit und/oder Weg-Steuerung mit der Harzmattenproduktionsvorrichtung (Flachbahnanlage) verbunden, so dass der Wärmeeintrag genau auf die unterschiedlichen Volumina (differenzierte Höhen und Breiten) eines Harzmattenabschnittes reagieren kann. Partielle Überhitzungen oder ungenügender Wärmeeintrag sollte dringendst vermieden werden. Auch ist es denkbar, dass ein Teil der Eindickstrecke starr und ein zweiter Teil der Eindickstrecke in der Länge veränderbar ist, so dass insbesondere bei Großanlagen bevorzugt die Eindickstrecke physikalisch betrachtet aus zwei Vorrichtungen besteht, aus einer starren und/oder einer in der Länge veränderbaren Eindickstrecke respektive Eindickvorrichtung.

Hinsichtlich der Übergabevorrichtung ist zu bemerken, dass diese im Wesentlichen aus mehreren funktionsgebenden Anlagenteilen bestehen kann, die nicht weiter ausgeführt oder vorgestellt werden können, da nicht alle möglichen Varianten an Anlagentypen bzw. -variationen besprochen werden können. Die Übergabevorrichtung umfasst aber im Sinne der Erfindung den Bereich ab dem Austrittspunkt der Harzmatte aus dem Bereich der Harzmattenproduktion. Vorzugsweise ist dieser Austrittspunkt mit dem Ablauf der Hauptreifezeit der Harzmatte identisch. Im Wesen der Harzmatten liegt es aber, dass dieser Zeitpunkt aber von vielerlei Faktoren abhängig ist. Es gibt hier eher ein Hauptreifezeitfenster, das sich aus den Zeitpunkten "früheste mögliche Verarbeitung" und "späteste Verarbeitung" definiert. Die außerhalb des Hauptreifezeitfensters liegenden Zeiten ergeben entweder unreife oder überreife Harzmatten die im Wesentlichen nicht oder nicht mehr verpresst werden können. Bezüglich der spätesten Verarbeitung muss natürlich noch Zeit für die Übergabevorrichtung bzw. bis zum Eintrag in die Formpresse einberechnet werden. Eine Übergabevorrichtung besteht vorzugsweise aus einer Schneidvorrichtung, einer ggf. notwendigen Vorrichtung zum Abzug der optionalen Folien von den Harzmatten, einer optionalen Vorrichtung zur Zusammenstellung eines Harzmattengeleges aus einer oder mehreren Harzmatten, einer optionalen Vorrichtung zum Transport der Harzmatten/- gelege zu einer oder mehrere Formpressen und einer entsprechenden Transfervorrichtung zur Übergabe der Harzmatten/-gelege in eine Formpresse.

Als Vorteil und Ergebnis aller Verfahrensschritte und Merkmale der Anlage gemäß der Erfindung können faserverstärkte Zuschnittmatten, wobei die genannten Fasern vorzugsweise Schnittglas aus Rovings und/oder Langfasern oder Kurzfasern zur Verbesserung der Steifigkeit des SMC-Formteils sind, mit der richtigen Plastizität in einem SMC-Direktverfahren der Weiterverarbeitung zu faserverstärkten duroplastischen Formteilen zugeführt werden, das heißt, das erfindungsgemäße SMC-Direktverfahren ist in der Lage höchst reproduzierbare langfaserverstärkte duroplastische Materialien dem Verarbeiter zur Verfügung zu stellen, die auch genau auf die Kontur des Werkzeuges einer Formpresse abgestimmt sind. Dazu werden die Harzmatten mit abschnittsweise divergierenden Volumina an Harzansatz und/oder Fasern produziert, wobei während der Produktion in der Mischvorrichtung unterschiedliche Produktionsvolumina pro Zeiteinheit mittels einer Steuerungsvorrichtung eingestellt werden. Zur Einstellung des Produktionsvolumens pro Zeiteinheit kann die Austragshöhe und/oder die Austragsbreite des Harzansatzes und/oder die Austragsmenge der Fasern verändert werden. Bevorzugt wird die endlose Harzmatte in Konturmattenabschnitte unterteilt, die im Wesentlichen in ihrer Länge den Zuschnittmatten entspricht. Dazu wird die Veränderung der Harzmatte abschnittsweise oder pro Zeiteinheit durchgeführt. Es ist auch vorstellbar, dass für starke Kontureinschnitte oder-veränderungen das (Transport-)Band für den Harzansatz kurz angehalten wird, um den Stellvorrichtungen Gelegenheit zu geben die geänderte Breite oder Höhe des Harzansatzes einzustellen. Weiter ist es vorstellbar, dass die Kontur nicht einheitlich über die Breite verändert wird, sondern dass auch differenzierte Konturen über die Breite bei der Erstellung innerhalb eines Harzansatzes möglich sind. Hierbei wird die Rakel über die Breite unterteilt und differenziert in ihrer Höheneinstellung eingestellt, beispielsweise durch eine Hauptrakel für eine grundsätzliche Harzansatzschichthöhe und zugeordneten Rakelschiebern, vorzugsweise mehrere über die Breite angeordnet, die den Harzansatz gezielt zurückhalten oder freigeben. Es ergeben sich Spuren in Produktionsrichtung mit unterschiedlichen Höhen. Eine derartige kontinuierlich oder abgesetzte Erhöhung könnte auch durch einen zusätzlichen Applikator (Breitschlitzdüse) nach einer Aufrakelung einer Harzansatzschicht auf ein Band oder eine Folie gebildet werden.

Vorzugsweise wird die variable Kontur in Höhe h und/oder Breite b und/oder die Menge an Fasern der Harzmatte, entsprechend den Anforderungen der in der Formpresse zu produzierenden Formteile, angepasst. Besonders vorteilhaft ist, wenn die Harzmatte zwischen der Walk- und Tränkvorrichtung und der Zuschnittvorrichtung mittels zumindest einer Heizvorrichtung erwärmt wird. Die einzubringende Wärmeenergie in die Harzmatte sollte dabei durch die Heizvorrichtung an die unterschiedlichen Konturen der Harzmatte angepasst werden. Als Heizvorrichtung bietet sich eine Mikrowellen- oder Hochfrequenzheizung an. Zur Einstellung der Konturen kann die Steuerungsvorrichtung zumindest eine Stellvorrichtung zur Einstellung der Breite b durch zumindest eine bewegliche Seitenwand einer Rakel und/oder die Steuerungsvorrichtung zumindest eine Stellvorrichtung zur Einstellung der Höhe h durch zumindest eine bewegliche Rakel und/oder die Steuerungsvorrichtung die Faserzuführvorrichtung zur Einstellung der Menge an Fasern ansteuern. Für aufwendige Werkstücke können mehrere aufeinanderfolgende Konturmattenabschnitte gleicher oder unterschiedlicher Konturen zu einem Gelege zusammengestellt und in einem Werkzeug einer Formpresse zu einem Formteil verpresst werden.

Ein anderer zusätzlicher Aspekt, der zeigt eine Erweiterung einer möglichen Anlage durch eine Auftragsvorrichtung zur Einbringung von Verstärkungsbereichen auf eine Harzansatzschicht einer zu produzierenden Harzmatte. Mittels einer geeigneten Auftragsvorrichtung, beispielsweise einem Industrieroboter und/oder einer Auslassdüse für Harzansatz und/oder einer traversierenden Streuvorrichtung für Fasern werden Verstärkungsbereiche in einer Harzmatte entwickelt und gezielt so abgelegt, dass diese in einem Konturmattenabschitt und später in der entsprechenden Zuschnittmatte passgenau zum entsprechenden Werkzeug in einer Formpresse respektive dem zu produzierenden Formteil angeordnet sind. Eine bevorzugte Anwendung wäre beispielsweise, ein Ort extremer Biegebeanspruchung oder ein geplanter Durchbruch in einem Formteil. Ein Durchbruch wird meist in Formteilen zu Halterung von weiteren Formteilen verwendet. Beispielshaft wäre bei einem Kotflügel ein Tankstutzen oder bei einem Stoßfänger Öffnungen für Zusatzscheinwerfer, Blinker, Abschleppösen zu nennen. Diese Durchbrüche haben den Auftrag gemein weitere Maschinenelemente aufzunehmen oder einen Durchgang freizugeben und somit teilweise eine regelmäßigen Beanspruchung im Einsetzbereich (Wind, Klappenmechaniken...) ausgesetzt sind. Es ergibt sich der Wunsch genau an diesen Bereichen einen höheren Faseranteil anzusetzen, damit Randbrüche weitestgehend ausgeschlossen sind oder die Dauerbelastungsfähigkeit signifikant erhöht werden kann. Es werden also topographische Muster auf einem Harzansatz gebildet, mittels eines Filmapplikators für den Harzansatz oder mittels einer lokalen Streuvorrichtung und/oder mittels geeigneter Vorrichtungen die bereits fertige Verstärkungsbereiche im Vorfeld ausbilden und diese entsprechend den Vorgaben auf der Harzansatzschicht platzieren. Es können auch andere Fasern, längere Fasern, gewebte Fasereinlagen, gerichtete Faseragglomerationen oder dergleichen eingesetzt werden.

Normalerweise sollte das Schnittglas / die Fasern immer beidseitig mit Harzfüllstoffgemisch abgedeckt sein, da ansonsten teilweise trockene Fasern anklebend an der Harzmatte im Produktionsverfahren entstehen würden. Bei einem differenzierten Lagenaufbau sollte daher ein Mehrlagenaufbau der Harzansatzschichten Anwendung finden. Hier wird beispielsweise die untere Harzschicht mit Fasern in der gleichen Kontur und mit einer Decklage aus Harzansatz(schicht) mit der gleichen Kontur abgedeckt. Diese beiden Harzschichten würden deckungsgleich und entsprechend zeitlich gesteuert über die beiden Rakeln erzeugt. Eine zusätzliche Zwischenschicht mit abweichender (differenzierter) Schicht, kann auch über ein in den Richtungen b/s (x/y) bewegbares Schneidwerk und einen b/s (x/y) bewegbaren Harzaustragskopf (beispielsweise mit einer Schlitzdüse) erfolgen. Um den korrekten Aufbau zu erhalten sollte dabei zuerst das Harz der zweiten Kontur auf die Faserschicht der ersten Kontur aufgetragen werden. Danach erfolgt der Auftrag der Fasern auf die zweite Kontur und schließlich über die obere Folie die Harzschicht der erstenKontur. In der Regel kann dort, wo weniger Harzfüllstoffgemisch (HFG) aufgerakelt werden, auch proportional weniger Schnittfasern aufgetragen werden, um das gleiche Mischungsverhältnis aufrecht zu halten oder aber auch ggf. bewusst davon abweichen. Hohlglaskugeln zur Reduzierung des Bauteilgewichtes können entweder bereits im Extruder in das HFG eingearbeitet werden oder aber auch auf die Harz-oder in die Faserschicht eingestreut werden. Grundsätzlich können die einzelnen Konturabschnitte auch in Produktionsrichtung zumindest einmal längs aufgeteilt werden (beispielsweise mit einem Mittelschnitt). Der Längsschnitt kann ebenfalls einer Kontur folgen, wobei die Außenkonturen links und rechts nicht unbedingt identisch sein müssen. Beispielsweise könnte mit einer Harzmattenkontur gleicher Länge zwei unterschiedliche Werkzeuge zweier oder einer Formpresse beschickt werden, wobei die rechte Kontur (der Längsseite) nicht mit der linken Kontur (Längsseite) identisch sein muss.

Die gezielte Einbringung von Verstärkungsbereichen in Formteilen an Orten übermäßiger oder extremer Biegebeanspruchung oder beispielsweise an geplanten Durchbrüchen im Formteil ist somit einfach zu bewerkstelligen. Ein Durchbruch wird meist zu Halterung von weiteren Formteilen verwendet. Beispielhaft wäre bei einem Kotflügel ein Tankstutzen oder bei einem Stoßfänger Öffnungen für Zusatzscheinwerfer, Blinker, Abschleppösen zu nennen. Diese Durchbrüche haben den Auftrag gemein weitere Maschinenelemente aufzunehmen, die teilweise eine regelmäßigen Beanspruchung im Einsetzbereich (Wind, Klappenmechaniken...) ausgesetzt sind. Es ergibt sich der Wunsch genau an diesen Bereichen einen höheren Faseranteil für höhere Steifigkeit anzusetzen, damit Randbrüche weitestgehend ausgeschlossen sind. Auch das Gegenteil, eine Erhöhung der Mischung in Richtung Harzansatz wäre denkbar, damit das Formteil flexibler in bestimmten Bereichen auf Biegebeanspruchungen reagieren kann. Zu diesem Zweck könnte zusätzlich Harzansatz in oder auf einen bereits vorhandenen Harzansatz eingebracht werden. Ein Fachmann versteht unter dem hier genannten Harzansatz auch ein Harzfüllstoffgemisch, in das zu dem Harzansatz Füllstoffe wie Kreide oder Hohlglaskugeln eingebracht worden sind. Eine denkbare Auftragsvorrichtung für nach eine nach einer Rakel aufzubringenden Verstärkungszone respektive einen Verstärkungsbereich, welche nicht auf diskontinuierlich und begrenzte Verstärkungsbereiche begrenzt ist, sondern auch kontinuierliche linienförmige Verstärkungsbereiche umfaßt, wäre eine Austragsdüse in Schlitz- oder Rundform mit einer entsprechenden zugehörigen Förderpumpe denkbar. Auch ein Extruder mit Austragsdüse, eine Auftragswalze ggf. mit einem Schälmesser oder ähnliche Vorrichtungen wären möglich. Hinsichtlich des Fasereintrages könnte neben den genannten Kurz- oder Langfasern auch eine Endlosfaser oder ein Faserband, Fasergewebestücke, Faservliese oder Fasergelege verwendet werden, die ein- oder sogar mehrschichtig aufgebaut sein können. Vorzugsweise sind die Festigkeit fördernde Einlagen vorimprägniert, weisen also beispielsweise bei Fasern bereits eine möglichst durchgängige Beschichtung mit Harzansatz auf. Beispiele wären hierfür Endlosfasern, die vor einer Zerkleinerungsvorrichtung durch eine Imprägnierstation laufen oder auch direkt nach der Imprägnierstation endlos auf eine Harzansatzschicht aufgebracht werden. Auch unidirektionale, vorzugsweise imprägnierte, Faserbänder (Fasertapes), Fasergewebestücke, Fasergelege, Faservlies oder dergleichen sind verwendbar.

Die Übergabe für Schnittfasern auf eine Harzansatzschicht wäre vorzugsweise ein Schneidkopf mit einer punktförmigen oder linienförmigen Austragsvorrichtung, der durch einen x/y-Linearantrieb an beliebige Stellen der SMC-Matte lokale Verstärkungen aufbringen kann und so die Verstärkungsbereiche erstellt. Bei unimprägniertem Material zur Erstellung eines Verstärkungsbereiches kann es ausreichend sein eine zweite Harzansatzschicht auf den Verstärkungsbereich aufzulegen oder ebenfalls punktuell oder linienförmig eine Schicht des Harzfüllstoffgemisches einzubringen, um das unimprägnierte Material ausreichend Harzansatz oder Harzfüllstoffgemisch zur Imprägnierung in der Walz- und Tränkstrecke zur Verfügung zu stellen.

Verstärkungsbereiche aus Endlosfasern können über ein angetriebenes Walzenpaar gezielt abgespult werden. Auch ein derartiges Walzenpaar kann in x/y-Richtung vorzugsweise mit einem geeigneten Linearantrieb bewegt werden, wobei vorzugsweise die Endlosfasern in Rohren zugeführt werden. Die Endlosfasern können auch quer zur Produktionsrichtung oder winkelig dazu orientiert werden. Die Auftragsvorrichtung kann zur gezielten Ablängung auch eine Schneidvorrichtung (Schnittschere) vorgesehen haben.

Faserbänder (auch Fasertapes genannt) können imprägniert oder unimprägniert sein. Für den Auftrag ist eine Abwickelstation als Auftragsvorrichtung vorgesehen, das dem der Endlosfasern gleicht. Unter Umständen ist eine Längsschnittvorrichtung aus zwei axial zueinander parallel angeordneten Schneidwalzen vorgesehen, um die Breite des Faserbandes zu verringern.

Fasergewebe, Fasergelege oder Faservliese werden üblicherweise aus Rollenwaren ausgestanzt oder ausgeschnitten. Danach können Sie mittels einem Industrieroboter oder auf einem Förderband der entsprechend definierten Position auf der Harzansatzschicht zugeführt werden. Das Ablegen erfolgt über einen Greifer des Industrieroboters, geeignete Transfersysteme (Greifer mit x/y-Linearantrieb) oder entsprechenden Rollbandsystemen. Insgesamt verspricht man sich von Rollbandsystemen einen Vorteil, weil dieses als Zwischenfördervorrichtung dazu geeignet sind als eine Vorablage für ein herzustellendes Fasergelege oder-gewebe zu dienen. Dies hat den Vorteil, dass ggf. weiter entfernt vom Band der Flachbahnanlage mittels separaten Vorrichtungen diese hergestellt werden können und entsprechend der Notwendigkeiten fertiggestellt mittels des Rollbandsystems zugeführt und direkt bzw. in einem Stück abgelegt werden können. Dadurch ergibt sich die Möglichkeit auch komplizierte Konturen direkt, beispielsweise in einer 3D-CAD Umgebung generiert, herzustellen und abzulegen.

Die Zuschnittmatten werden im weiteren Verlauf des Verfahrens direkt zu Formteilen verpresst oder es werden aus mehreren Zuschnittmatten Gelege zusammengestellt, die schließlich verpresst werden. Üblicherweise sind die Zuschnittmatten kleiner als die Werkzeuggeometrie, so dass beim Fließpressen noch ein Fließvorgang entsteht ist. Die Zuschnittmatten sind deshalb vorzugsweise proportional zu den Werkzeuggeometrien gefertigt. Sie werden vorzugsweise entsprechend orientiert in das Werkzeug eingelegt.

Zusätzliche Mittel zur Verstärkung sind lokal begrenzt, aber auch in Spuren längs und/oder quer und/oder als lokal begrenzte Konglomerate in die Harzmatte einbringbar. Die Mittel zur Verstärkung sind dabei gegenüber der Harzansatzschicht lokal begrenzt, was bedeutet, dass die Mittel zur Verstärkung nicht vollflächig aufgetragen werden. Der klarzustellende Unterschied in der Begrifflichkeit besteht darin, dass bei der Herstellung von SMC-Harzmatten eine übliche Menge an Verstärkungsfasern eingebracht wird, wobei diese gleichmäßig über die Breite und vor allem vollflächig durchgeführt wird. Die in Rede stehenden zusätzlichen Mittel zur Verstärkung sind zu diesem Eintrag an vollflächiger Verstärkung als weitere zusätzliche Mittel zur Verstärkung anzusehen, die lokal und begrenzt die eingebrachte "übliche" Faserverstärkung unterstützen sollen.

Weitere vorteilhafte Maßnahmen und Ausgestaltungen des Gegenstandes der Erfindung gehen aus den Unteransprüchen und der folgenden Beschreibung mit der Zeichnung hervor. Die folgenden Darstellung sind nicht direkt als Einzelfalllösungen anzusehen, sondern enthalten in Teilen auch allgemeine Hinweise und Aufgabenlösungen.

Es zeigen:
- Figur 1: eine beispielhafte Anlage zur kontinuierlichen Herstellung von faserverstärkten Harzmatten im Zuge der Herstellung von faserverstärkten Formteilen mittels Fließpressen in einer Formpresse in schematischer Seitenansicht mit einer Produktionsrichtung von links nach rechts, wobei die Harzmatten zwischen zwei endlosen Bändern hergestellt werden,
- Figur 2: eine Draufsicht auf die untere Rakelstrecke und das untere (Transport-)Band mit Darstellung einer möglichen Kontur der Harzmatte in der Breite,
- Figur 3: eine Seitenansicht auf die Mischvorrichtung nach Figur 1 mit einer Darstellung einer möglichen wiederkehrenden Harzmattenkontur in der Höhe der Harzmatte,
- Figur 4: eine schematische Seitenansicht einer Harzmattenkontur als Zuschnittmatte und ein beispielhaftes korrespondierendes Werkzeug in einer Formpresse,
- Figur 5: eine schematische Draufsicht auf ein Gelege aus mehreren Zuschnittmatten unterschiedlicher Kontur zur Verpressung in einem Werkzeug einer Formpresse,
- Figur 6: eine schematische Darstellung einer Steuer- und/oder Regelungsvorrichtung mit einer mindestnötigen Anzahl an Verknüpfung der einzelnen Anlagenteile zur Durchführung des Verfahrens bei der Ansteuerung und Belieferung mehrere Formpressen mit optimierten Zuschnittmatten,
- Figur 7: eine beispielhafte Darstellung einer differenzierten Kontur über die Breite einer Harzmatte im Schnitt,
- Figur 8: eine Erweiterung einer möglichen Anlage durch eine Auftragsvorrichtung zur Einbringung von Verstärkungsbereichen auf eine Harzansatzschicht einer zu produzierenden Harzmatte,
- Figur 9: eine Darstellung möglicher Stellvorrichtungen und ggf. zugehörigen Rakelschiebern zur Veränderung der Höhe einer Harzansatzschicht über die Breite bei der Erstellung einer differenzierten Kontur einer Harzmatte nach Figur 7 und
- Figur 10: eine Sammlung beispielhafter Auftragsvorrichtungen oder aufzutragender Verstärkungsmittel zur Einbringung von Verstärkungsbereichen in eine zu produzierende Harzmatte.

Figur 1 zeigt eine Anlage, die auch zur Durchführung des Verfahrens geeignet aber auch eigenständig betrieben werden kann, in einer Seitenansicht. Sie besteht zur Herstellung faserverstärkter Formteile (SMC) mittels Fließpressen in ihren markanten Teilen aus einer Mischvorrichtung 1 mit einer Harzansatzaufbringstrecke A, der Walk- und Tränkstrecke B und dem Eindickbereich C. Eine Mischstation für die Mischung der Einzelkomponenten oder ein Dosierbunker für den Harzansatz 9 ist nicht dargestellt. Die Anlage nach Figur 1 zeigt eine Anlage, in der in der Mischvorrichtung 1, der Walk- und Tränkvorrichtung 14 sowie im Eindick-Durchlaufspeicher 25 als Flachbahnanlage 16 keine Einmalfolien Verwendung finden müssen, sondern zwei wieder verwendbare, endlose Bänder 2 und 3, die die Harzmatte 10 über Umlenkrollen 22 durch diese Anlagenteile führen. Eine üblicherweise notwendige Entlüftungsstrecke wurde aus Gründen der Übersichtlichkeit nicht dargestellt, kann aber mit Bestandteil der Flachbahnanlage 16 sein. Bestimmte Harzansätze, insbesondere stark adhäsiv oder mit die Bänder 2 und 3 angreifenden chemischen Einsatzstoffen versehene Harzansätze, können dennoch auf die Bänder 2 und 3 aufzulegende Einmalfolien voraussetzen. Der vorgemischte Harzansatz 9 wird mit der Rakel 4 auf das untere Band 2 zur Harzansatzschicht 5 aufgerakelt. Auf diese untere Harzansatzschicht 5 werden dann Fasern 6 aus Schnittglas als Lang- bzw. Kurzfasern aufdosiert. Es können auch, insbesondere für tragende Teile oder geometrische Besonderheiten im Formteil, Verstärkungsbereiche durch die Einlage von zusätzlichen Endlosfasern, Fasermatten, weiteren Harzansatzschichten in notwendiger Geometrie generiert werden. Hierzu ist eine Auftragsvorrichtung 38 beliebig angeordnet. Die Auftragsvorrichtung 38 weist vorzugsweise zumindest eine Quertraverse 37 auf, an der die Auftragsvorrichtung 38 mittels geeigneter Linearförderer in und quer zur Produktionsrichtung oder zur Höhenverstellung verfahren werden kann. Es wäre auch denkbar anstelle der Auftragsvorrichtung 38 einen Industrieroboter (nicht dargestellt) mit der gezielten und ggf. wiederkehrenden Ablage von Verstärkungsmittel zur Bildung von Verstärkungsbereichen 38 zu beauftragen. Gleichzeitig erfolgt ein Aufrakeln der Harzansatzschicht 8 mittels der Rakel 7 auf das obere Band 3. Nach dem Zusammenführen der beiden Harzansatzschichten 5 (mit den Fasern 6) und 8 und ihr Einführen zwischen die unteren und oberen Walzen 11 und 13 wird die Harzmatte 10 in der Walk- und Tränkstrecke B (Walk- und Tränkvorrichtung 14) geformt, wobei die Fasern 6 mit dem Harzansatz 9 durchtränkt und zusammengewalkt werden. Die so geformte endlose Harzmatte 10 wird dann zum Reifen durch eine Eindickvorrichtung 25 geführt. In Produktionsrichtung vor der Eindickvorrichtung 25 kann eine Heizvorrichtung 24 angeordnet sein, vorzugsweise eine Mikrowellenvorrichtung. Ist die Harzmatte 10 gereift wird sie von Messerleisten (nicht dargestellt) von den Bändern 2 und 3 abgelöst und der Zuschnittvorrichtung 17, vorzugsweise einer Übergabevorrichtung 19 zugehörig, zugeführt. In der Zuschnittvorrichtung 17 wird die Harzmatte 10 je nach Vorgabe in der Länge und/oder in der Breite geschnitten, und mittels in der Übergabevorrichtung 19 angeordneter Übergabemittel, hier ein Transportband, als Zuschnittmatte 18 der Formpresse 20 zugeführt und in der Formpresse 20 zum Formteil 21 verpresst und ausgehärtet.

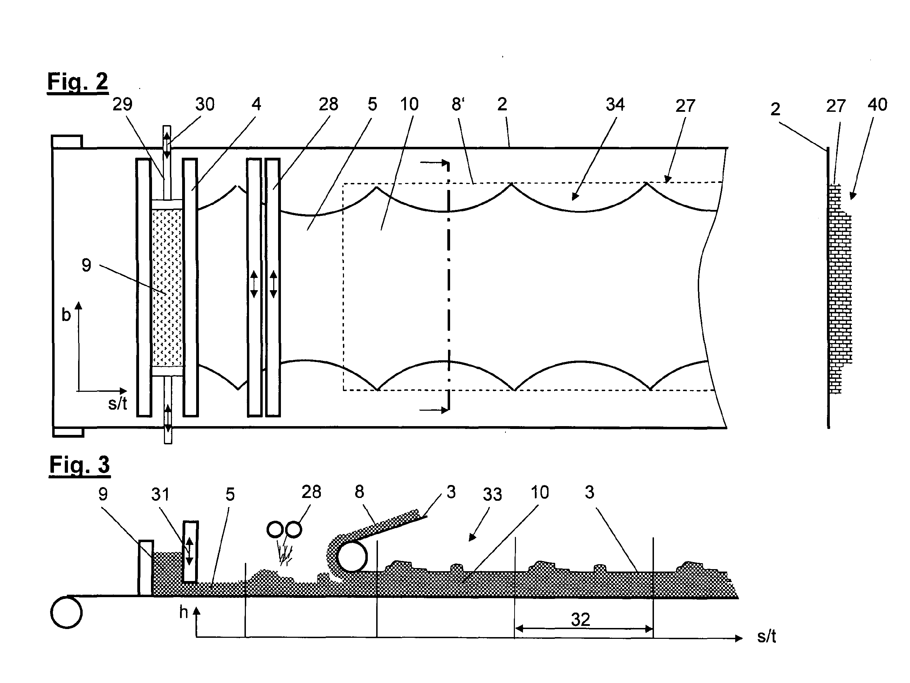

Figur 2 stellt eine Draufsicht auf die untere Rakelstrecke und das untere Band 2 mit Darstellung einer möglichen Kontur 34 an der Längsseite 27 der Harzmatte 10 in der Breite b dar. Zur Einstellung der Kontur 34 kann die Breite b des Austrages der Rakel 4 mittels der seitlichen bewegbaren Seitenwände 29 eingestellt werden. In vorliegendem Beispiel findet sich eine gleichförmige Bewegung der Seitenwände 29, so dass eine wellenförmige Kontur entsteht. Bewusst wurde auf die obere Rakel 7 in der Darstellung verzichtet, um die Zeichnung möglichst einfach und übersichtlich zu halten.

Es sei aber darauf hingewiesen, dass neben der Möglichkeit beide Rakeln 4, 7 entsprechend ihrem Abstand zueinander oder abhängig vom Treffpunkt der beiden Harzansatzschichten 5 und 8 koordiniert und/oder entsprechend zeitgleich, in ihrer Breite b des Austrages zu verstellen auch die Variante denkbar ist, nur eine Rakel 4 oder 7 hinsichtlich der Breite- und/oder Höhenverstellung anzusteuern. Dies ist in Figur 2 durch die strichlinierte Begrenzung der Harzansatzschicht 8' dargestellt. Damit wäre nicht grundsätzliche die Breite b der Harzmatte 10 durch die Rakeln 4 und 7 an den Längsseiten 27 verändert (Kontur 34 wäre linear ausgebildet), sondern es entsteht eine Veränderung des Volumens über die Breite b, also quer zur Produktionsrichtung. Die Veränderung führt zur einer differenzierten Kontur 40 der Höhe h über die Breite b der Harzmatte 10 zwischen den Bändern 2 und 3, vgl. hierzu das Schnittbild auf der rechten Seite der Figur 2. Das Schnittbild zeigt eine über die Breite b gleichmäßige Längsseite 27, weil die Harzansatzschicht 5 mit einer anderen Kontur (in diesem Fall mit einer linearen Längsseite 27) der Harzansatzschicht 8' überlappt worden ist. Es ergeben sich damit geringere Volumen bzw. Dichten in den Randbereichen an den Längsseiten 27 der Harzmatte 10. Vorzugsweise würde aber eine derartige Variante mit drei Harzansatzschichten durchgeführt und vorzugsweise die mittlere Harzansatzschicht mit einer differenzierten Kontur ausgeführt werden. In vorteilhafter Weise würde der Faseranteil problemlos über die gesamte Breite b gestreut werden können und an den Längsseiten wäre ein geringerer Anteil an Harzansatz einstellbar ohne dass die notwendigen Fasern, insbesondere wichtig in dünnen Bereichen des Formteils, verloren gingen oder nur an der Oberfläche (einer Harzansatzschicht) verbleiben. Ein Fachmann erkennt die mannigfaltigen Möglichkeiten die die vorgeschlagenen Einstellungsmöglichkeiten bieten und die Vielfalt an denkbaren Variationen in diesem Zusammenhang.

Bevorzugt wird aber die Breite des Fasereintrages angepasst und/oder die Breitenverstellung seitenverkehrt in Bezug auf die dargestellten Rakeln so eingestellt, dass die Fasern immer auf eine Harzansatzschicht fallen bzw. abgelegt werden. Im Sinne der Erfindung wird also die Breitenverstellung auch im Sinne einer Volumenänderung verstanden, so dass sich der Begriff Kontur im Wesentlichen auch auf die Dicke, die Dichte- bzw. Volumenveränderung über die Breite und Länge der Harzmatte 10, respektive der Zuschnittmatte 18 beziehen kann. Weiter ist es natürlich denkbar, dass nur eine Längsseite 27 der Harzmatte 10 oder alternierend die Längsseiten durch die Seitenwände 29 verändert werden. Für Sägezahnförmige oder kantenförmige Konturabschnitte ist es denkbar die Produktionsgeschwindigkeit der Flachbahnanlage 16 kurz anzuhalten oder die Produktionsgeschwindigkeit zu verringern, bis die entsprechenden Stellvorrichtungen 30 die Seitenwände 29 an ihre entsprechende Position verschoben haben. Flexible Flachbahnanlagen 16 sind in der Lage dies durchzuführen, alternativ kann in der Flachbahnanlage 16 zu diesem Zwecke ein Puffersystem vorgesehen sein, dass den Stopp in der Harzansatzaufbringstrecke A kompensiert und es ermöglicht die Walk- und Tränkstrecke B und/oder die Eindickstrecke C kontinuierlich weiterlaufen zu lassen.

Vorzugsweise ist die Faserzuführvorrichtung 28, vorzugsweise als Schnittglaszuführung oder als Schneidwerk für Endlosfasern, ebenfalls über die Breite abschnittsweise und/oder in Bezug auf die Austragsmenge einstellbar und variabel. Ein Fachmann erkennt deutlich die Vorteile dieser Ausgestaltung, können nun speziell in dünnen Bereichen (vgl. Beispiel der Kontur 40 nach Figur 1 rechts) der Harzmatte 10 weniger Fasern 6 aufgestreut werden um ein "Durchscheinen" der Fasern 6 an der Oberfläche eines Werkstückes respektive Formteils 21 zu vermeiden. Auch sollte es möglich sein vorgegebene Mischungsverhältnisse zwischen Harzansatzmenge und Fasern problemlos zu erreichen. Natürlich sollte die Faserzuführvorrichtung 28 entsprechend zur Seitenverstellung ansteuerbar sein um die Kontur 34 quasi nachzufahren und nicht unnötig Fasern 6 auf leere Bereiche des Bandes 2 zu streuen. Auch kann die Menge an Fasern 6 speziell auf schwierige Fließbereiche des Werkzeuges abgestimmt werden. Unter Fasern sind Füllstoffe oder Verstärkungsmittel wie Rovings, Kurzschnitt- oder Langfasern vorstellbar, die in der industriellen Anwendung bekannt und weit verbreitet sind und sich für faserverstärkte Werkstoffanwendungen eignen. Weiter finden sich Hohlglaskugeln, Faserbänder, Fasergewebe, gerichtete Fasern, Metalleinlagen und Fasern mit einer sehr langen Schnittlänge, die vorzugsweise gerichtet auf den Harzansatz aufgelegt werden. Insbesondere wird letztere Aufzählung für lokale Verstärkungen verwendet.

Figur 3 zeigt weiter eine Seitenansicht auf die Mischvorrichtung 1 nach Figur 1 mit einer Darstellung einer möglichen wiederkehrenden Harzmattenkontur in der Höhe h einer Harzmatte 10. Gegenüber der vorherigen Figur ist hierbei das obere Band 3 in Teilen sichtbar. Das schematische Koordinatensystem stellt dabei in seiner Längserstreckung der x-Achse wie in der vorherigen Figur, den Ablauf über die Zeit t oder den Weg s des Harzansatzes 5, 8 respektive der Harzmatte 10 dar. Die beispielhafte Konturmatte 32 zeigt in der Kontur 33 ein wiederkehrendes Muster an Erhöhungen, die ggf. mit einer Breitenverstellung nach Figur 2 korrespondieren kann. Diese Erhöhungen in der Konturmatte 32 sind abgestimmt auf die Konturen eines Werkzeuges 35 in einer Formpresse 20. Die Stellvorrichtungen 31 verfahren dabei die Rakel 4 in der Höhe h und erzeugen die Kontur 33 der Harzmatte 10. Wie bereits beschrieben, kann die Höhenverstellung der Rakel 4 ggf. auch abschnittsweise über die Breite b einstellbar sein, so dass sich Längsstreifen unterschiedlicher Höhe über die Breite ergeben, die wiederum bezogen auf eine Konturmatte 32 oder auf die gesamte Harzmatte 10 unterschiedliche Höhen h aufweisen können.

Es ist deutlich erkennbar, welche Möglichkeiten sich dem Fachmann nun in dem vorgestellten Verfahren und der Anlage bieten, wenn die Konturen 33 und 34 in jeder möglichen denkbaren Variabilität einstellbar und insbesondere auf die Werkzeuge 35 in einer oder sogar mehreren Formpressen 20 einstellbar sind. Insbesondere kann mit Hilfe dieser Lösung eine Direktbeschickung von komplexen Werkzeugen 35 in Formpressen 20 ermöglicht und/oder die Erstellung von Gelegen aus Zuschnittmatten 18 für Formpressen 20 deutlich vereinfacht werden, weil entscheidende Stellen für das Fließenpressen im Werkzeug 35 bereits optimiert in Breite, Höhe und/oder hinsichtlich des Faseranteils in den Harzmatten 10 eingestellt werden können und nicht durch Zuschneiden oder zusätzliche Schnittteile nachgebessert werden müssen. In hochwertigen Anlagen können auch mehrschichtige SMC-Halbzeuge mit mehr als zwei Harzansatzschichten hergestellt werden. Dabei können auch ggf. mehrere Faserschichten dazugehören. Das gilt nicht nur für Konturen 33, 34, sondern in vorteilhafter Weise auch für die Menge an Fasern 6, die optimiert an die Fließzonen des SMC-Halbzeuges eingebracht werden können und auch hilfreich sind ungetränkte Faserballungen in einem Formteil 21 zu verhindern.

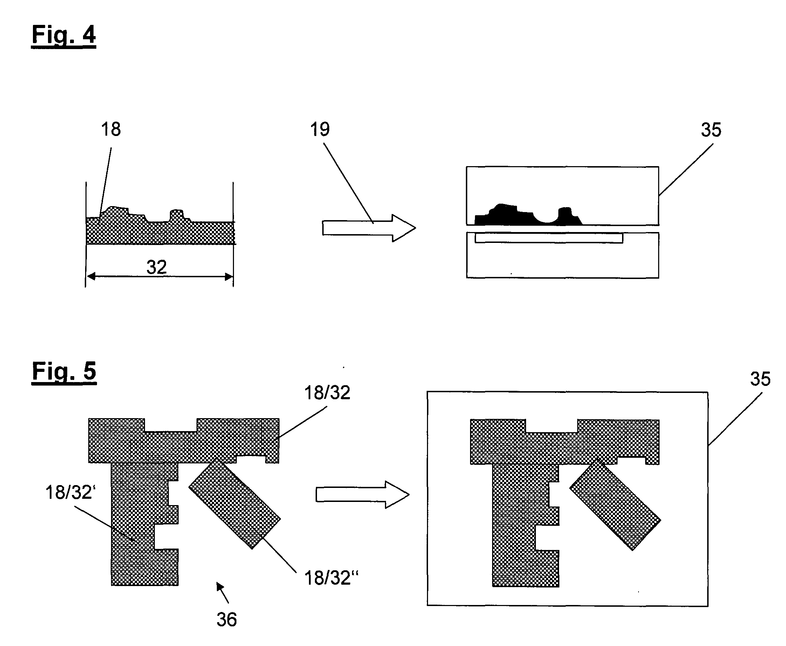

Figur 4 zeigt eine schematische Seitenansicht einer Zuschnittmatte 18, entsprechend eines Konturmattenabschnittes 32 nach Figur 3, die durch die Übergabevorrichtung 19 in ein Werkzeug 35 einer Formpresse 20 (nicht in der Figur dargestellt) eingebracht wird. Die Zuschnittmatte 18 kann nun mit ihrer eingestellten Kontur, die in vereinfachter Darstellung auf das korrespondierende Werkzeug 35 abgestimmt ist, zu einem Formteil 21 verpresst werden.

Figur 5 zeigt eine schematische Draufsicht auf ein Gelege 36 aus mehreren Zuschnittmatten 18, die basierend auf den Konturmattenabschnitten 32, 32', 32" unterschiedlicher Konturen zur Verpressung aufweisen und entsprechend zusammengelegt mittels der Übergabevorrichtung 19 in ein Werkzeug 35 einer Formpresse 20 eingelegt und dort verpresst werden. Es ist nicht zwingend vorgesehen, dass die Konturmattenabschnitte 32, 32', 32" in gleicher Reihenfolge produziert werden. Es kann beispielsweise vorgesehen sein, dass zwischen Konturmattenabschnitt 32' und 32" noch eine Konturmattenabschnitt 32^{x} produziert wird, der in einer weiteren Formpresse 20' oder in einem weiteren Gelege 36 für eine weitere Formpresse 20', 20" Verwendung findet.

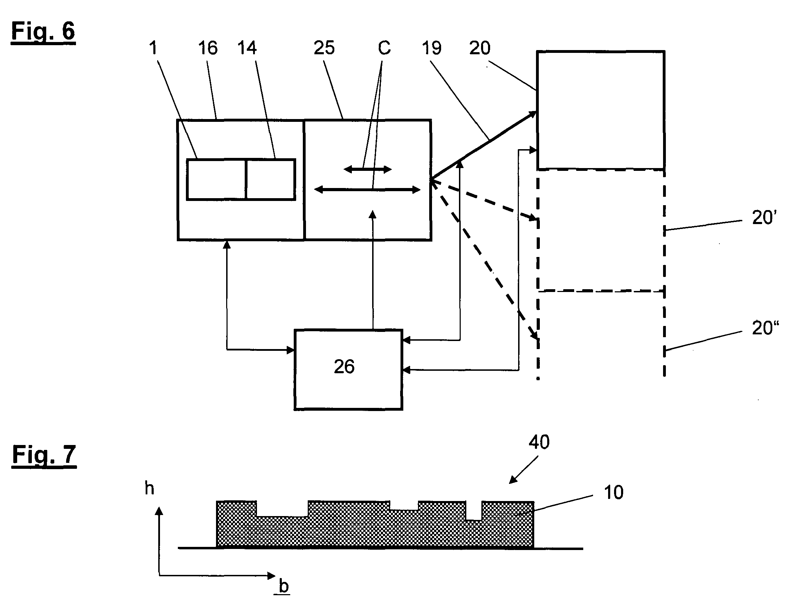

In Figur 6 ist in einer stark makroskopischen und schematische Darstellung eine Steuer- und/oder Regelungsvorrichtung mit einer mindestnötigen Verknüpfung der einzelnen Anlagenteile zur Ausführung eines denkbaren Verfahrens zum Betreiben einer derartigen Anlage dargestellt. Dabei ist zumindest eine Steuerungsvorrichtung 26 mit zumindest einer der folgenden Anlagenteile steuerungs- und/oder regelungstechnisch wirkverbunden: zumindest einer Formpresse 20, 20', 20"..., einer Übergabevorrichtung 19 und der Flachbahnanlage 16 mit einer Mischvorrichtung 1, einer Walk- und Tränkvorrichtung 15, einer Eindickvorrichtung 25 als Produktionsvorrichtung zur Erstellung einer endlosen Harzmatten 10, die mittels einer Zuschnittvorrichtung 17 zur Zuschnittmatte 18 abgelängt wird. Hinsichtlich steuer- und regelungstechnischer Begrifflichkeiten sei darauf hingewiesen, dass die Steuerungsvorrichtungen vorzugsweise aus einem programmierbarem Universalrechner besteht, der durch besondere Schnittstellen mit den einzelnen Anlagenteilen durch geeignete Steuerungstechnik und Messaufnehmer zur Rückmeldung von Ist- und zum Vergleich mit Sollwerten die Aufgaben der Steuerung und Regelung abwechselnd oder gleichzeitig durchführen muss, insbesondere abhängig mit welchem Anlagenteil der Steuer- oder Regelungsstrang verbunden ist. Zur Darstellung einer Regelungsgröße, zur Einstellung der Eindickstrecke C, ist diese nur mit einem einfachen Pfeil mit der Eindickvorrichtung 25 verbunden, was nicht ausschließt, dass über Sensoren Rückmeldungen über den Zustand und entsprechende Regelungen zur genauen Einstellung der Eindickstrecke C vorhanden sind oder notwendig erachtet werden. In der schematischen Darstellung erkennt man auch den Zusammenhang wie die Harzmatten 10, die in der Mischvorrichtung 1 und der Walk- und Tränkvorrichtung 14 hergestellt, vorzugsweise übergangslos in die Eindickvorrichtung 25 zur veränderlichen Eindickstrecke C überführt, dort gereift und anschließend nach der Ablängung an die Übergabevorrichtung 19 zum Transport der erstellten Zuschnittmatten 18 in die entsprechende Formpresse 20, 20', 20" ... übergeben wird.

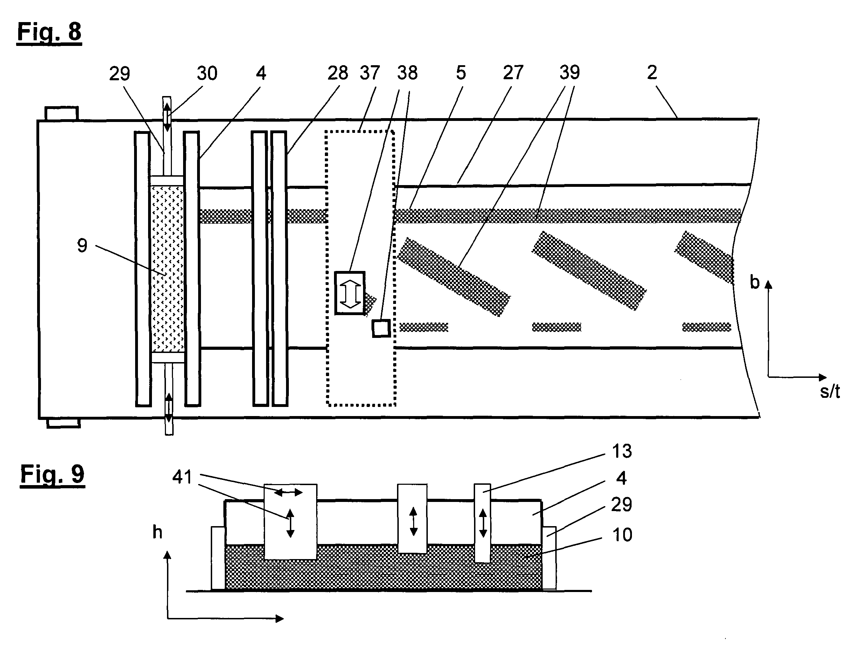

Figur 7 zeigt eine beispielhafte Darstellung einer differenzierten Kontur 40 mit unterschiedlichen Höhen h über die Breite b einer Harzmatte 10 im Schnitt. Auch diese Varianten wären demgemäß einstellbar, benötigen aber etwas Mehraufwand hinsichtlich einer einstellbaren Rakel 4, 7. Hierzu zeigt Figur 9 beispielshafte zusätzliche Rakelschieber 13, die an der über die Breite die Grundhöhe des Harzansatzes einstellbaren Rakel 4 angeordnet sind und abschnittsweise über die Breite einen Austrag zurückhalten oder freigeben. Mit dieser Variante ist es insbesondere möglich Spuren höheren oder geringeren Materialanteils an einer Harzanschicht zu generieren.

Figur 8 zeigt eine Erweiterung einer möglichen Anlage durch eine Auftragsvorrichtung zur Einbringung von Verstärkungsbereichen 39 auf eine Harzansatzschicht 5 einer zu produzierenden Harzmatte, wobei die obere Harzansatzschicht 8 nicht dargestellt ist. Mittels einer geeigneten Auftragsvorrichtung 38, die vorzugsweise an zumindest einer Quertraverse über dem Band 2 angeordnet und mittels zumindest einer Linearförderrichtung in zumindest eine Richtung bewegbar ist, werden Verstärkungsbereiche 39 in einer Harzmatte 10 ausgebildet und dabei gezielt so abgelegt, dass diese in einem Konturmattenabschnitt 32 und später in der entsprechenden Zuschnittmatte 18 passgenau zum entsprechenden Werkzeug 35 einer Formpresse 20 angeordnet sind. Ein anderer Verstärkungsabschnitt wird dabei durch eine partielle Überhöhung über die Breite durch einen erhöhten Harzansatzaustrag aus der Rakel 4 gebildet und stellt sich als durchgehender Verstärkungsbereich dar. Eine zweite Auftragsvorrichtung 38 ist stationär angeordnet und kann strichweise Verstärkungsbereiche, Fasern- und/oder Harzfüllstoffmaterial, austragen.

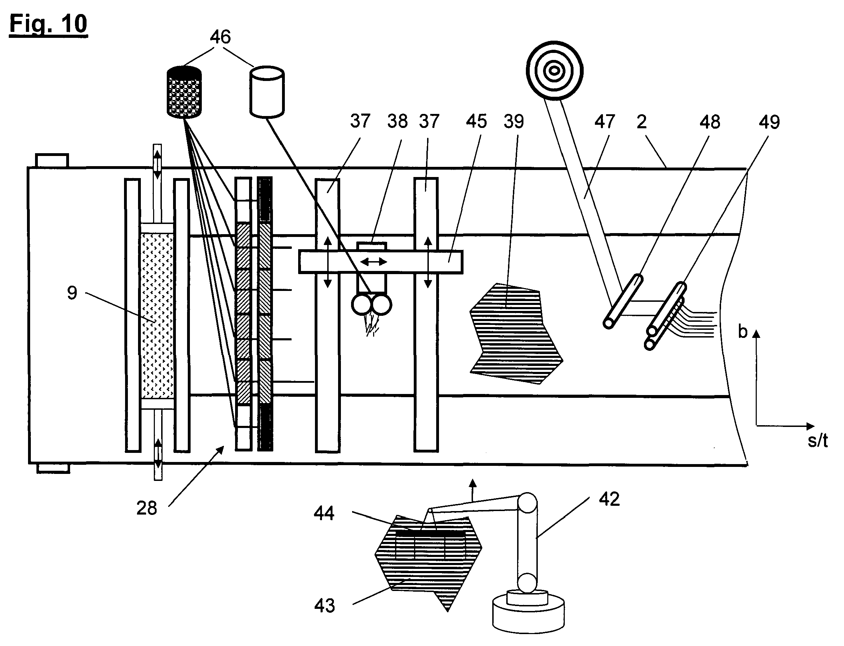

In Figur 10 ist eine Sammlung beispielhafter Aus- oder besser Auftragsvorrichtungen 38 für aufzutragende Verstärkungsmittel zur Einbringung von Verstärkungsbereichen in eine zu produzierende Harzmatte dargestellt. In Produktionsrichtung findet sich zuerst auf der linken Seite eine über die Breite einstellbare Faserzuführvorrichtung, die aufgrund einer recht schmalen Breite der unteren Harzansatzschicht 5 die beiden äußeren Austragsbereiche deaktiviert und nur mittels der inneren vier Austragsbereiche (schraffiert dargestellt) aus zumindest einer Endlosfaserrolle 46 abzuwickelnde Endlosfasern entweder direkt oder zerteilt auf die Harzansatzschicht auflegt. In Produktionsrichtung weiter findet sich eine anspruchsvollere Ausführung einer Auftragsvorrichtung 38 auf zwei Quertraversen mit einer Linearfördervorrichtung 45. Ein Verstärkungsbereich 39, gebildet aus einem Faservlies 43 oder einem äquivalenten Konglomerat, findet sich bereits auf dem Harzansatz und wird durch einen Industrieroboter 42 und einem daran angeordneten Greifer von außerhalb zugeführt und entsprechend den Vorgaben an einem definierten Ort eines Konturabschnittes abgelegt. Das Faservlies 43 kann hierzu beispielsweise von einer endlosen Rolle ausgestanzt oder ausgeschnitten sein und wird vorzugsweise auf einer Zwischenfördervorrichtung angeliefert. Die Zwischenfördervorrichtung kann beispielsweise auch zwischen einer dargestellten Auftragsvorrichtung 38 für einen Verstärkungsbereich 39 angeordnet sein, so dass die Auftragsvorrichtung 38 beispielsweise eine komplizierte Kontur auf einer Zwischenfördervorrichtung, vorzugsweise ein Transferband aus einem endlosen Förderband, erstellen, die dann durch einfach durch eine Bewegung des Transferbandes auf der Harzansatzschicht abgelegt wird.
Schlussendlich findet sich als weiteres Ausführungsbeispiel für eine Austragsvorrichtung eine Faserbandführungsrolle 48, die ein Faserband 47 von einer Rolle abzieht und einer Längsschneidevorrichtung 49 zuführt. In Verbindung mit einer nicht dargestellten Ablängvorrichtung (Schneidmesser) kann auch hiermit ein lokaler Verstärkungsbereich 39 erstellt werden.

Es lässt sich feststellen, dass die bildhafte Darstellung nur dem Verständnis dient und in Teilen mangel behaftet in Bezug auf die Realität ist. Es ist nachvollziehbar, dass eine eingestellte Kontur in Länge, Breite und Höhe durch die Walk- und Tränkstrecke B durchaus "verwalkt" wird und entsprechend nicht mehr die Schärfe der ursprünglichen Einstellungen verwirklicht. Insbesondere die Möglichkeit gezackte Konturveränderungen durch einen kurzeitigen Stopp der Mischvorrichtung hervorzurufen hilft diese Problematik zu entschärfen. Dennoch ist es möglich die Einstellung der Konturen erfindungsgemäß zu verwirklichen und zu benutzen. Insbesondere ist es von Vorteil, wenn die Anlage über einen Universalcomputer gesteuert werden kann, der die Aufgaben einer herkömmlichen Steuer- und/oder Regelungsvorrichtung übernimmt. In dieser Vorrichtung würde demnach das örtliche Zusammentreffen der verstellbaren unteren Harzansatzschicht 5 aus der Rakel 4 mit dem Auftrag der Fasern 6 aus der Faserzuführvorrichtung 28 und/oder der Auftragsvorrichtung 38 und mit der oberen Harzansatzschicht 8 aus der Rakel 7 gesteuert. Gleichzeitig wird eine Weg-Zeit-Verfolgung der entstandenen Harzmatte sichergestellt, beispielsweise über eine zeit- oder wegabhängige bzw. wegverfolgte Steuerung, um sicherzustellen, dass die Harzmatte 10 derart produziert wird, dass die hergestellten Konturmattenabschnitte 32 problemlos nach der Mischvorrichtung 1 zu den benötigten Zuschnittmatten für ein oder mehrere Werkzeuge oder Gelege zugeschnitten werden können und signifikante Konturen den Notwendigen entsprechen. Für eine Vereinfachte Weg/Zeitverfolgung kann vor dem Zusammenführen der beiden Harzansatzschichten eine geometrische Besonderheit oder eine andere geeignete Markierung an zumindest einer der Harzansatzschichten, vorzugsweise im Außenbereich, angeordnet werden, um hierüber die Trennlinie zweier Konturmattenabschnitte zu definieren und um mittels einer geeigneten Erkennungsvorrichtung den Trennschnitt durch die Zuschnittvorrichtung 17 exakt zu legen. Eine geeignete Markierung kann ein Barcode auf einer Folie oder eine andere geeignete Markierung sein, beispielsweise ein Folienstück, das durch die Zuschneidvorrichtung wieder automatisch entnommen wird oder eine Farbmarkierung auf der Oberfläche des Harzansatzes. Farbmarkierungen könnten mit fluoszierenden Mitteln ausgeführt sein, die nur unter spezieller Beleuchtung erkennbar sind und die vorzugsweise durch eine Temperaturerhöhung im Werkzeug der Formpresse ihre Fluoreszenz verlieren. Auch wäre denkbar bei der Herstellung der Harzansatzschichten Erhöhungen oder Senkungen einzubauen, die von der Erkennungsvorrichtung identifiziert werden können und die Zuschneidvorrichtung aktivieren. 1403

**Bezugszeichenliste: DP 1403**

| | | | |
|---|---|---|---|
| 1. | Mischvorrichtung | 29. | Seitenwand beweglich |
| 2. | Band unten | 30. | Stellvorrichtung 29 |
| 3. | Band oben | 31. | Stellvorrichtung 4 |
| 4. | Unteres Rakel | 32. | Konturmattenabschnitt (endlos) |
| 5. | Harzansatzschicht | 33. | Kontur der Höhe h längs |
| 6. | Fasern | 34. | Kontur der Breite b |
| 7. | Oberes Rakel | 35. | Werkzeug in 20 |
| 8. | Harzansatzschicht | 36. | Gelege |
| 9. | Harzansatz | 37. | Quertraverse |
| 10. | Harzmatte | 38. | Auftragsvorrichtung |
| 11. | Walzen, unten | 39. | Verstärkungsbereiche |
| 12. | Walzen, oben | 40. | Kontur der Höhe h quer |
| 13. | Rakelschieber | 41. | Stellvorrichtung |
| 14. | Walk- und Tränkvorrichtung | 42. | Industrieroboter |
| 15. | Folienabzug | 43. | Faservlies |
| 16. | Flachbahnanlage | 44. | Greifer |
| 17. | Zuschnittvorrichtung | 45. | Linearfördervorrichtung (b/s) |
| 18. | Zuschnittmatte | 46. | Endlosfaserrolle |
| 19. | Übergabevorrichtung | 47. | Faserband |
| 20. | Formpresse | 48. | Faserbandführungsrolle |
| 21. | Formteil | 49. | Längsschneidevorrichtung |
| 22. | Umlenkrolle | | |
| 23. | Austrittspunkt | | |
| 24. | Heizvorrichtung | A | Harzansatzaufbringstrecke |
| 25. | Eindickvorrichtung | B | Walk- und Tränkstrecke |
| 26. | Steuervorrichtung | C | Eindickstrecke |
| 27. | Längsseite von 10 | b | Breite Harzmatte 10 |
| 28. | Faserzuführvorrichtung | h | Höhe Harzmatte 10 |

## Patentansprüche

1. Verfahren zur Herstellung von faserverstärkten Formteilen mittels Fließpressen in einer Formpresse (20) aus einer in einer Flachbahnanlage (16) kontinuierlich hergestellten faserverstärkten Harzmatte (10), wobei in einer Mischvorrichtung (1) zumindest eine Harzansatzschicht (5, 8) mit Fasern (6) zusammengeführt, in einer nachfolgenden Walk- und Tränkvorrichtung (14) vermischt und schließlich in einer Eindickvorrichtung (25) zu einer endlosen Harzmatte (10) gereift wird, wobei die endlose Harzmatte (10) zu einer Zuschnittmatte (18) geschnitten und nachfolgend direkt oder zu einem Gelege (36) mit weiteren Zuschnittmatten (18) zusammengelegt mittels einer Übergabevorrichtung (19) in ein Werkzeug (35) einer Formpresse (20) überführt und in der Formpresse (20) zu einem faserverstärkten Formteil (21) verpresst wird, **dadurch gekennzeichnet, dass** zur Herstellung einer eine unterschiedliche Breite (b) aufweisenden endlosen Harzmatte (10) zumindest eine Harzansatzschicht (5, 8) mit einer unterschiedlichen Breite (b) aus einer Rakel (4, 7) ausgetragen wird.

2. Verfahren nach Anspruch 1, **dadurch gekennzeichnet, dass** zur Herstellung zumindest einer variablen Kontur (33, 34, 40) in der Höhe (h) in und/oder quer zur Produktionsrichtung aufweisenden endlosen Harzmatte (10) zumindest eine Harzansatzschicht (5, 8) mit einer unterschiedlichen Höhe (h) in und/oder quer zur Produktionsrichtung aus einer Rakel (4, 7) ausgetragen wird und optional die Breite und/oder die Menge der Fasern (6) mittels zumindest eine Faserzuführvorrichtung (28) hinsichtlich der Menge unterschiedlich in und/oder quer zur Produktionsrichtung und/oder in unterschiedlicher Breite (b) ausgetragen wird.

3. Verfahren nach Anspruch 1 oder 2, **dadurch gekennzeichnet, dass** die Harzmatte (10) quer entsprechend den Konturmattenabschnitten (32) zu Zuschnittmatten (18) aufgeteilt wird, die im Wesentlichen in ihrer Länge den Zuschnittmatten (18) für ein Werkzeug (35) oder einem Teil eines Geleges (36) entsprechen.

4. Verfahren nach einem oder mehreren der vorhergehenden Ansprüche, **dadurch gekennzeichnet, dass** die Harzmatte (10) quer entsprechend den Konturmattenabschnitten (32) zu Zuschnittmatten (18) aufgeteilt wird, wobei die Zuschnittmatten (18) zumindest einmal in Produktionsrichtung aufgeteilt werden und allein, zusammen oder mit anderen Zuschnittmatten (18) in einem Werkzeug (35) oder als ein Teil eines Geleges (36) für ein Werkzeug (35) verwendet werden.

5. Verfahren nach einem oder mehreren der vorhergehenden Ansprüche,
**dadurch gekennzeichnet, dass** eine Veränderung der Harzmatte (10) oder der Harzansatzschichten (5, 8) zeit-, strecken- oder abschnittsweise durchgeführt werden.

6. Verfahren nach einem oder mehreren der vorhergehenden Ansprüche,
**dadurch gekennzeichnet, dass** die variable Kontur (33, 34, 40) in Höhe (h) und/oder Breite (b) und/oder hinsichtlich der Verteilung oder der Menge an Fasern (6) der Harzmatte (10) entsprechend den Anforderungen der in der Formpresse (20) zu produzierenden Formteile (21) oder an die Werkzeuge (35) angepasst wird.

7. Verfahren nach einem oder mehreren der vorhergehenden Ansprüche,
**dadurch gekennzeichnet, dass** die Harzmatte (10) zwischen der Walk- und Tränkvorrichtung (14) und der Zuschnittvorrichtung (17) mittels zumindest einer Heizvorrichtung (24) erwärmt wird.

8. Verfahren nach Anspruch 7,
**dadurch gekennzeichnet, dass** die einzubringende Wärmeenergie in die Harzmatte (10) durch die Heizvorrichtung (24) an die unterschiedlichen Konturen (33, 34, 40) der Harzmatte (10) angepasst wird.

9. Verfahren nach einem oder mehreren der vorhergehenden Ansprüche,
**dadurch gekennzeichnet, dass** zur Einstellung zumindest einer Kontur (33, 34, 40) eine Steuerungsvorrichtung (26) zumindest eine Stellvorrichtung (30) zur Verstellung der Breite (b) einer Rakel (4, 7) und/oder die Steuerungsvorrichtung (26) zumindest eine Stellvorrichtung (31) zur zumindest teilweisen Verstellung der Höhe (h) an einer Rakel (4, 7) und/oder die Steuerungsvorrichtung (26) die Faserzuführvorrichtung (28) zur Einstellung der Breite und/oder der Menge an Fasern (6) ansteuert.

10. Verfahren nach einem oder mehreren der vorhergehenden Ansprüche, **dadurch gekennzeichnet, dass** mehrere aufeinanderfolgende Konturmattenabschnitte (32, 32', 32", ...) gleicher oder unterschiedlicher Konturen (33, 34, 40) zu einem Gelege (36) zusammengestellt und in einem Werkzeug (35) einer Formpresse (20) zu einem Formteil (21) verpresst werden.

11. Anlage zur Herstellung von faserverstärkten Formteilen mittels Fließpressen in einer Formpresse (20) aus einer in einer Flachbahnanlage (16) kontinuierlich hergestellten faserverstärkten Harzmatte (10), wobei in der Flachbahnanlage (16) eine Mischvorrichtung (1) zur Zusammenführung von zumindest einem Harzansatz (5, 8) mit Fasern (6), eine nachfolgende Walk- und Tränkvorrichtung (14) zur Vermischung und eine Eindickvorrichtung (25) zur Reifung der endlosen Harzmatte (10) angeordnet ist, wobei zur Ablängung der endlosen Harzmatte (10) zu einer Zuschnittmatte (18) eine Zuschnittvorrichtung (17), zur Übergabe der Zuschnittmatte (18) an die Formpresse (20) eine Übergabevorrichtung (19) und zur Verpressung der Zuschnittmatte (18) zu einem faserverstärkten Formteil (21) zumindest eine Formpresse (20) angeordnet ist, **dadurch gekennzeichnet, dass** zur Herstellung zumindest einer eine unterschiedliche Breite (b) aufweisenden endlosen Harzmatte zumindest eine Stellvorrichtung (30) zur Einstellung unterschiedlicher Breiten (b) an zumindest einer Rakel (4, 7) angeordnet ist.

12. Anlage nach Anspruch 11, **dadurch gekennzeichnet, dass** zur Herstellung zumindest einer variablen Kontur (33, 34, 40) in der Höhe in und/oder quer zur Produktionsrichtung aufweisenden endlosen Harzmatte (10) zumindest eine Stellvorrichtung (31, 41) zur Einstellung unterschiedlicher Höhen (h) in und/oder quer zur Produktionsrichtung an zumindest einer Rakel (4, 7) angeordnet ist und/oder zur Einstellung der Breite (b) und/oder der Menge der Fasern (6) zumindest eine in der Menge in und/oder quer zur Produktionsrichtung und/oder in der Breite (b) einstellbare Faserzuführvorrichtung (28) angeordnet ist.

13. Anlage nach Anspruch 11 oder 12, **gekennzeichnet,** dass Mess- und/oder Stellvorrichtungen für eine Weg- und/oder Zeitverfolgung der Konturen (33, 34) angeordnet sind.

14. Anlage nach einem oder mehreren der vorhergehenden Ansprüche 11 bis 13, **dadurch gekennzeichnet, dass** zwischen der Wal- und Tränkvorrichtung (14) und der Zuschnittvorrichtung (17) zumindest eine Heizvorrichtung (24) für die endlose Harzmatte (10) angeordnet ist.

15. Anlage nach einem oder mehreren der vorhergehenden Ansprüche 11 bis 14, **dadurch gekennzeichnet, dass** die Steuervorrichtung (26) weiter mit zumindest einer der folgenden Anlagenteile steuerungs-und/oder regelungstechnisch wirkverbunden ist: zumindest einer Formpresse (20), einer Übergabevorrichtung (19) und einer Flachbahnanlage (16) zur Erstellung einer endlosen Harzmatte (10).

## Claims

1. A method for producing fibre-reinforced moulded parts by means of extrusion-moulding in a moulding press (20) from a fibre-reinforced resin sheet (10) which is continuously produced in a flat web installation (16), wherein at least one resin base layer (5, 8) is combined with fibres (6) in a mixing apparatus (1), is subsequently mixed in a fulling and saturating apparatus (14), and is finally matured in a thickening apparatus (25) to form a continuous resin sheet (10), wherein said continuous resin sheet (10) is cut to form a cut sheet (18), and is then transferred, either directly or joined in a laid structure (36) with other cut sheets (18), by means of a transfer apparatus (19) to a tool (35) of a moulding press (20), and is pressed in the moulding press (20) to form a fibre-reinforced moulded part (21), **characterized in that** at least one resin base layer (5, 8) with a different width (b) is discharged from a doctor blade (4, 7) for the production of a continuous resin sheet (10) having a different width (b).

2. A method according to claim 1, **characterized in that** at least one resin base layer (5, 8) with a different height (h) in and/or transversely to the production direction is discharged from the doctor blade (4, 7) for producing a continuous resin sheet (10) having at least one variable contour (33, 34, 40) in the height (h) in and/or transversely to the production direction, and optionally the width and/or the quantity of the fibres (6) is discharged by means of at least one fibre feed apparatus (28) concerning the quantity in a different manner in and/or transversely to the production direction and/or in a different width (b).

3. A method according to claim 1 or 2, **characterized in that** the resin sheet (10) is divided transversely according to the contour sheet sections (32) into cut sheets (18), which substantially correspond with respect to their length to the cut sheets (18) for a tool (35) or a part of a laid structure (36).

4. A method according to one or several of the preceding claims, **characterized in that** the resin sheet (10) is divided transversely according to the contour sheet sections (32) into cut sheets (18), wherein the cut sheets (18) are divided at least once in the production direction and are used alone, together or with other cut sheets (18) in a tool (35) or as a part of a laid structure (36) for a tool (35).

5. A method according to one or several of the preceding claims, **characterized in that** a change in the resin sheet (10) or the resin base layers (5, 8) are carried out periodically, in sections or in part.

6. A method according to one or several of the preceding claims, **characterized in that** the variable contour (33, 34, 40) is adjusted with respect to height (h) and/or width (b) and/or the distribution or quantity of fibres (6) of the resin sheet (10) according to the requirements of the moulded parts (21) to be produced in the moulding press (20) or on the tools (35).

7. A method according to one or several of the preceding claims, **characterized in that** the resin sheet (10) is heated between the fulling and saturating apparatus (14) and the cutting apparatus (17) by means of at least one heating apparatus (24).

8. A method according to claim 7, **characterized in that** the thermal energy to be introduced into the resin sheet (10) by the heating apparatus (24) is adjusted to the different contours (33, 34, 40) of the resin sheet (10).

9. A method according to one or several of the preceding claims, **characterized in that** for setting at least one contour (33, 34, 40) a control apparatus (26) triggers at least one actuating apparatus (30) for setting the width (b) of a doctor blade (4, 7), and/or the control apparatus (26) triggers at least one actuating apparatus (31) for the at least partial adjustment of the height (h) on a doctor blade (4, 7), and/or the control apparatus (26) triggers the fibre feed apparatus (28) for setting the width and/or the quantity of the fibres (6).

10. A method according to one or several of the preceding claims, **characterized in that** several successive contour sheet sections (32, 32', 32", ...) of the same or different contours (33, 34, 40) are assembled into a laid structure (36) and are pressed in a tool (35) of a moulding press (20) into a moulded part (21).

11. An installation for producing fibre-reinforced moulded parts by means of extrusion-moulding in a moulding press (20) from a fibre-reinforced resin sheet (10) which is continuously produced in a flat web installation (16), wherein a mixing apparatus (1) for combining at least one resin base layer (5, 8) with fibres (6), a subsequent fulling and saturating apparatus (14) for mixing, and a thickening apparatus (25) for maturing the continuous resin sheet (10) are arranged in the flat web installation (16), wherein a cutting apparatus (17) is arranged for cutting to size the continuous resin sheet (10), a transfer apparatus (19) is arranged for transferring the cut sheet (18) to the moulding press (20), and at least one moulding press (20) is arranged for pressing the cut sheet (18) into a fibre-reinforced moulded part (21), **characterized in that** at least one actuating apparatus (30) for setting different widths (b) is arranged on at least one doctor blade (4, 7) for producing at least one continuous resin sheet having a different width (b).

12. An installation according to claim 11, **characterized in that** at least one actuating apparatus (31, 41) for setting different heights (h) in and/or transversely to the production direction is arranged on at least one doctor blade (4, 7) for producing at least one resin sheet (10) having a variable contour (33, 34, 40) in and/or transversely to the production direction, and/or at least one fibre feed apparatus (28) which is adjustable in the quantity in and/or transversely to the production direction and/or in the width (b) is arranged for setting the width (b) and/or the quantity of the fibres (6).

13. An installation according to claim 11 or 12, **characterized in that** measurement and/or actuating apparatuses are arranged for path and/or time tracking of the contours (33, 34).

14. An installation according to one or several of the preceding claims 11 to 13, **characterized in that** at least one heating apparatus (24) for the continuous resin sheet (10) is arranged between the fulling and saturating apparatus (14) and the cutting apparatus (17).

15. An installation according to one or several of the preceding claims 11 to 14, **characterized in that** the control apparatus (26) is further operatively connected with respect to open-loop and/or closed-loop control to at least one of the following installation parts: at least one moulding press (20), a transfer apparatus (19) and a flat web installation (16) for producing a continuous resin sheet (10).

## Revendications

1. Procédé de fabrication de pièces moulées renforcées de fibres, par formage par fluage dans une presse de formage (20), à partir d'une nappe de résine (10) renforcée de fibres fabriquée en continu dans une installation de production à plat (16), dans lequel au moins une couche de base de résine (5, 8) est combinée à des fibres (6) dans un dispositif mélangeur (1), mélangée dans un dispositif de foulage et d'imprégnation (14) qui fait suite à celui-ci et finalement maturée dans un dispositif d'épaississement (25) pour donner une nappe de résine sans fin (10), laquelle nappe de résine sans fin (10) est coupée pour donner une nappe découpée (18) puis transférée, directement ou après avoir été réunie dans une superposition (36) avec d'autres nappes découpées (18), dans un outil (35) d'une presse de formage (20) au moyen d'un dispositif de transfert (19) et pressée pour donner une pièce moulée renforcée de fibres (21), **caractérisé en ce qu'**afin de fabriquer une nappe de résine sans fin (10) ayant une largeur (b) différente, au moins une couche de résine de base (5, 8) d'une largeur (b) différente est appliquée à partir d'une racle (4, 7).

2. Procédé selon la revendication 1, **caractérisé en ce qu'**afin de fabriquer une nappe de résine sans fin (10) présentant au moins un contour variable (33, 34, 40) en hauteur (h) et/ou transversalement par rapport au sens de production, au moins une couche de résine de base (5, 8) ayant une hauteur (h) différente dans et/ou transversalement par rapport au sens de production est appliquée à partir d'une racle (4, 7) et la largeur et/ou la quantité des fibres (6) est facultativement appliquée en quantités différentes dans le sens de production et/ou transversalement par rapport à celui-ci et/ou dans une largeur (b) différente au moyen d'au moins un dispositif d'alimentation en fibres (28).

3. Procédé selon la revendication 1 ou 2, **caractérisé en ce que** la nappe de résine (10) est partagée transversalement en nappes découpées (18) suivant les sections de nappe contournées (32), dont la longueur correspond pour l'essentiel aux nappes découpées (18) pour un outil (35) ou à une partie d'une superposition (36).

4. Procédé selon une ou plusieurs des revendications précédentes, **caractérisé en ce que** la nappe de résine (10) est partagée en nappes découpées (18) transversalement suivant les sections de nappe contournées (32), les nappes découpées (18) étant partagées au moins une fois dans le sens de la production et utilisées seules, ensemble ou avec d'autres nappes découpées (18) dans un outil (35) ou comme partie d'une superposition (36) pour un outil (35).

5. Procédé selon une ou plusieurs des revendications précédentes, **caractérisé en ce que** les modifications de la nappe de résine (10) ou des couches de résine de base (5, 8) sont effectuées en fonction du temps, de la distance ou par sections.

6. Procédé selon une ou plusieurs des revendications précédentes, **caractérisé en ce que** le contour variable (33, 34, 40) est adapté en hauteur (h) et/ou en largeur (b) et/ou en ce qui concerne la répartition ou la quantité de fibres (6) de la nappe de résine (10) suivant les exigences relatives aux pièces moulées (21) à produire dans la presse de formage (20) ou aux outils (35).

7. Procédé selon une ou plusieurs des revendications précédentes, **caractérisé en ce que** la nappe de résine (10) est chauffée au moyen d'un moins un dispositif de chauffage (24) entre le dispositif de foulage et d'imprégnation (14) et le dispositif de découpe (17).

8. Procédé selon la revendication 7, **caractérisé en ce que** le dispositif de chauffage (24) adapte l'énergie thermique à transmettre à la nappe de résine (10) aux différents contours (33, 34, 40) de la nappe de résine (10).

9. Procédé selon une ou plusieurs des revendications précédentes, **caractérisé en ce qu'**en vue de l'ajustement d'au moins un contour (33, 34, 40), un dispositif de commande (26) commande au moins un dispositif de réglage (30) pour régler la largeur (b) d'une racle (4, 7) et/ou le dispositif de commande (26) commande au moins un dispositif de réglage (31) pour le réglage au moins partiel de la hauteur (h) sur une racle (4, 7) et/ou le dispositif de commande (26) commande le dispositif d'alimentation en fibres (28) pour ajuster la largeur et/ou la quantité de fibres (6).

10. Procédé selon une ou plusieurs des revendications précédentes, **caractérisé en ce que** plusieurs sections de nappe contournées (32, 32', 32"...) ayant des contours (33, 34, 40) identiques ou différents sont réunies en superposition (36) et pressées dans un outil (35) d'une presse de formage (20) pour donner une pièce moulée (21).

11. Installation pour la fabrication de pièce moulées renforcées de fibres au moyen d'un pressage par fluage dans une presse de formage (20) à partir d'une nappe de résine (10) renforcée de fibres fabriquée en continu dans une installation de production à plat (16), dans laquelle un dispositif mélangeur (1) réunissant au moins une résine de base (5, 8) avec des fibres (6), un dispositif de foulage et d'imprégnation (14) lui faisant suite pour le mélange et un dispositif d'épaississement (25) pour la maturation de la nappe de résine sans fin (10) sont disposés dans l'installation de production à plat (16), un dispositif de découpe (17) étant prévu pour recouper la nappe de résine sans fin (10) et obtenir une nappe découpée (18), un dispositif de transfert (19) pour amener la nappe découpée (18) à la presse de formage (20) et au moins une presse de formage (20) pour presser la nappe découpée (18) et obtenir une pièce moulée (21) renforcée de fibres, **caractérisée en ce qu'**afin d'obtenir une nappe de résine sans fin présentant au moins une largeur (b) différente, il est prévu au moins un dispositif de réglage (30) pour l'ajustement de largeurs (b) différentes sur au moins une racle (4, 7).

12. installation selon la revendication 11, **caractérisée en ce qu'**afin de fabriquer une nappe de résine sans fin (10) présentant au moins un contour variable (33, 34, 40) en hauteur (h) et/ou transversalement par rapport au sens de production, au moins un dispositif de réglage (31, 41) est prévu pour ajuster des hauteurs (h) différentes dans le sens de production et/ou transversalement par rapport à celui-ci sur au moins une racle (4, 7) et/ou pour ajuster la largeur (b) et/ou la quantité des fibres (6) d'au moins un dispositif d'alimentation en fibres (28) réglable en quantité dans le sens de production et/ou transversalement par rapport à celui-ci et/ou dans la largeur (b).

13. installation selon la revendication 11 ou 12, **caractérisé en ce que** des dispositifs de mesure et/ou de dispositif de réglage sont prévus pour suivre les contours (33, 34) dans la distance et/ou dans le temps.

14. installation selon une ou plusieurs des revendications 11 à 13, **caractérisée en ce qu'**il est prévu entre le dispositif de foulage et d'imprégnation (14) et le dispositif de découpe (17) au moins un dispositif de chauffage (24) pour la nappe de résine sans fin (10).

15. installation selon une ou plusieurs des revendications 11 à 14, **caractérisée en ce que** le dispositif de commande (26) est en outre en liaison active pour la commande et/ou la régulation avec au moins une des parties d'installation suivantes au moins une presse de formage (20), un dispositif de transfert (19) et une installation de production à plat (16) pour la production d'une nappe de résine (10) sans fin.
